# EUROPEAN PATENT SPECIFICATION

(11) **EP 4 517 365 B1**
(45) Date of publication and mention of the grant of the patent: **04.11.2026**
(21) Application number: 24192330.9
(22) Date of filing: 01.08.2024
(51) Int. Cl.: G01S 7/28, G01S 7/41, G01S 13/95, G06N 3/08, G01S 13/02

(54) **SENSOR FUSION-BASED GCS FOR AESA RADAR VIA ADAPTIVE PATTERN NULL FORMING**
AUF SENSORFUSION BASIERENDE GCS FÜR AESA-RADAR ÜBER ADAPTIVE MUSTERNULLUNGSFORMUNG
GCS BASÉ SUR LA FUSION DE CAPTEURS POUR RADAR AESA PAR L'INTERMÉDIAIRE D'UNE FORMATION DE ZÉROS DE MOTIF ADAPTATIF

(30) Priority: 29.08.2023 US 202318239297
(43) Date of publication of application: 05.03.2025
(73) Proprietor: Rockwell Collins, Inc., Cedar Rapids, IA 52498 (US)
(72) Inventor: WEST, James B., Cedar Rapids (US); SISHTLA, Venkata A., Cedar Rapids (US); MORAN, Jiwon L., Marion (US); DAVIES, Orion D., Cedar Rapids (US)
(74) Representative: Dehns

(56) References cited:
- US-A1- 2022 082 687
- US-B1- 11 181 634
- US-B1- 8 203 480

## Description

### BACKGROUND

Conventional weather radar systems are designed to detect weather phenomena such as precipitation, clouds, and turbulence. However, the radar signals can also detect non-weather targets such as buildings, trees, mountains, and other ground-based obstacles. These non-weather targets can produce unwanted radar echoes or reflections that clutter the radar display and obscure the detection of weather phenomena.

For an airborne weather radar, detecting microbursts is very challenging due to the presence of strong ground clutter. In civil aviation, numerous airports exhibit strong reflecting objects such as bridges, building infrastructure, runway lights, etc., that create severe challenges for state-of-the-art commercial airborne radar applications. False alerts due to strong clutter targets can result in disruption to the flight. These clutter inducing objects are well documented in terms of longitude, latitude, and altitude, and are stored in various terrain mapping data sets. The scattering objects are essentially geolocation time invariant.

Ground clutter can be reduced by using various signal processing techniques such as filtering, thresholding, and clutter maps. However, these techniques are not always effective, especially in areas with high densities of obstacles or uneven terrain. Therefore, there is a need for a weather radar system that can effectively reduce ground clutter caused by non-weather targets. US 2022/082687 A1 discloses an agile antenna taper based on weather radar feedback. US 8 203 480 B1 relates to a predictive and adaptive weather radar detection system and method. US 11 181 634 B1 relates to systems and methods of intelligent weather sensing using deep learning convolutional neural networks.

### SUMMARY

A computer apparatus is provided as defined by claim 1. The computer apparatus comprises an electronically scanned array "ESA" antenna, a data storage element, at least one processor in data communication with the ESA antenna, the data storage element, and a memory storing processor executable code for configuring the at least one processor to: determine a relative location of a ground clutter source with respect to the ESA antenna; determine an electronic configuration to produce a null in a radiation pattern of the ESA corresponding to the relative location of the ground clutter source; and continuously steer the null to maintain a relative orientation of the null toward the ground clutter source. The apparatus further comprises a plurality of sensors, wherein the plurality of sensors includes a GPS/GNSS receiver and an altimeter, wherein the at least one processor is further configured to receive GPS data and altimeter data. At least one processor is configured as a trained neural network; and the trained neural network is configured to: receive the GPS data and the altimeter data; determine a current geolocation and a current altitude; determine that the neural network is trained on data including boundary constraints of the current geolocation and altitude; and determine an I/Q adjustment to a radar return signal. An aircraft radar system including an antenna, a processor, and a data storage element. The data storage element includes geolocation data of ground-based structures that are likely to produce ground clutter. Based on the location and orientation of the aircraft, the processor determines where to produce a null or adjust a taper in the antenna radiation pattern to exclude the ground clutter.

In a further aspect, sensors on the aircraft provide data to geolocate ground clutter inducing targets in real-time. Sensor data is collated, and potentially correlated to stored maps or other databases.

A method is provided as defined by claim 6. The method comprises determining a relative location of a ground clutter source with respect to an electronically scanned array "ESA" antenna; determining an electronic configuration to adjust an amplitude taper or non-uniform phase distribution along an aperture of the ESA antenna to create a radiation pattern of the ESA to manipulate side lobe levels at a location corresponding to the relative location of the ground clutter source; continuously adjusting the amplitude taper to maintain the manipulated side lobe levels toward the ground clutter source; receiving GPS data and altimeter data by at least one processor from a plurality of sensors, wherein the plurality of sensors includes GPS/GNSS receivers and an altimeter; configuring the at least one processor as a trained neural network. The trained neural network is configured to: receive the GPS data and the altimeter data; determine a current geolocation and altitude; determine that the neural network is trained on data including boundary constraints of the current geolocation and altitude; and determine an I/Q adjustment to a radar return signal. A multi-mode radar system is provided as defined by claim 10. The multi-mode radar system comprises an electronically scanned array "ESA" antenna; a data storage element; and at least one processor in data communication with the ESA antenna, the data storage element, and a memory storing processor executable code for configuring the at least one processor to: determine a relative location of a ground clutter source with respect to the ESA antenna; determine an electronic configuration to produce a null in a radiation pattern of the ESA corresponding to the relative location of the ground clutter source; continuously steer the null to maintain a relative orientation of the null toward the ground clutter source; a plurality of sensors, wherein the plurality of sensors includes GPS/GNSS receivers and an altimeter, wherein the at least one processor is further configured to receive GPS data and altimeter data; the at least one processor is configured as a trained neural network; and the trained neural network is configured to: receive the GPS data and the altimeter data; determine a current geolocation and a current altitude; determine that the neural network is trained on data including boundary constraints of the current geolocation and altitude; and determine an I/Q adjustment to a radar return signal.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
- FIG. 1: shows a block diagram of a system suitable for implementing exemplary embodiments;
- FIG. 2: shows a radiation pattern according to an exemplary embodiment;
- FIG. 3A: shows a block diagram of a method for training a neural network according an exemplary embodiment;
- FIG. 3B: shows a block diagram of a method for utilizing a neural network according to an exemplary embodiment;
- FIG. 4: shows a flowchart of a method for determining a processing architecture to de-clutter a return signal;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to an aircraft radar system including an antenna, a processor, and a data storage element. The data storage element includes geolocation data of ground-based structures that are likely to produce ground clutter. Based on the location and orientation of the aircraft, the processor determines where to produce a null or adjust a taper in the antenna beam to exclude the ground clutter. Sensors on the aircraft provide data to geolocate ground clutter inducing targets in real-time. Sensor data is collated, and potentially correlated to stored maps or other databases. A trained machine learning algorithm may receive sensor data and other inputs to identify ground clutter inducing targets, and potentially generate nulls or adjust tapers to exclude such targets. Machine learning algorithms may enable multiple sensors to add multiple data sets to aid with clutter verification; rapid data analytics and adaptation of live data on an air platform; and active nulling which enables adaptive changes in null location and null shapes to efficiently block clutter.

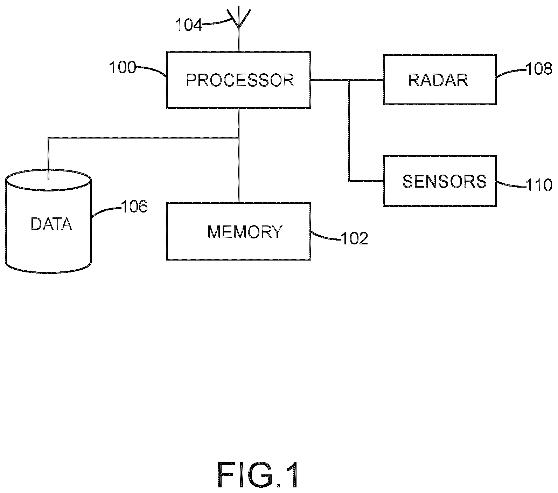

Referring to FIG. 1, a block diagram of a radar system suitable for implementing exemplary embodiments is shown. It is difficult to detect targets that may have ground contamination. Some ground contamination may represent very bright targets (that saturate sensitive radar receive circuitry), even coming through side lobes. Such ground contamination cannot be differentiated from other threats. For low-cost ESAs, the amount of side lobes that we can suppress is smaller than for contemporary, mechanically steered slotted waveguide flat-plate arrays. Current flat-plate arrays may have 2-way side lobes of about 60 dB from the main lobe. ESAs may have 2-way side lobes of 40 dB to 50dB from the main lobe. Suppressing side lobes is paramount, especially to reduce undesired clutter signals embedded within the side lobes that would prevent low level windshear signals from being detected within the main beam. However, when suppressing bright ground clutter, real targets may also be suppressed.

In at least one embodiment, the radar system includes at least one processor 100, memory 102 connected to the processor 100 for embodying non-transitory processor executable code, and an ESA antenna 104. The processor 100 is configured to retrieve data from a data storage element 106; the data corresponding to known locations of stationary ground clutter / ground obstacles. The processor 100 determines a relative location of the ground clutter with respect to the aircraft based on the known location of the aircraft and the known locations of the ground clutter.

**The** processor 100 determines an electronic configuration for the ESA 104 to produce a null toward the determined relative location. Such null excludes the ground clutter and allows the ESA 104 to receive return signals from targets that may otherwise by obfuscated by return signals from the ground clutter. The nulls are created by adjusting the phase and amplitude of the ESA's aperture excitation using an adaptive nulling algorithm. It may be appreciated that while specific embodiments described herein are directed to null placement, the methodologies are also applicable to modify sidelobes by adjusting amplitude taper of the signal.

In at least one embodiment, as the as the aircraft moves through space and as the ESA 104 is steered across the horizon / azimuth, the processor 100 recomputes electronic configurations for the ESA 104 to maintain the null in direction of the determined location for each subsequent pulse. In at least one embodiment, the processor 100 may use a priori information from the data storage element 106 to apply an adaptive taper.

A priori information from the data storage element 106 may comprise sets of coordinates and altitudes of known structures. The processor may then receive the location of the aircraft and determine the distance of the aircraft from the coordinates. Alternatively, the a priori information may comprise precomputed nulls to apply at various locations along a flight path.

In at least one embodiment, some or all of the data in the data storage element 106 may be derived via one or more sensors 110, including one or more radars 108 and vision sensors, in data communication with the processor 100. Such sensors 108, 110 may include, but are not limited to, temperature sensors, GPS/GNSS, Precision Navigation Timing (PNT), weather radar relative navigation, radar landing altimeter, Electro-optic runway landing imagers, TACAN, LORAN and glide slope / localizer landing systems, FAA mandated Communications, Navigation and Surveillance (CNS) system, or the like. Data from such sensors 108, 110 may be geolocated and collated with other data in the data storage element 106 such as maps, data recorded over multiple flights, or other data sets to produce a more complete picture of the surrounding area to determine where nulls are desirable to exclude large, stationary targets. Furthermore, any such data may be received via a datalink connection from external sources. The processor 100 may embody a multi frequency feedback system whereby radar returns and sensor inputs drive beam shaping via sensor fusion.

In at least one embodiment, the processor 100 may embody a trained AI configured to receive sensor data including data stream from the sensors 108, 110 in real-time to identify ground clutter. For example, image streams from one or more radars 108 may be used in conjunction with an object recognition algorithm to locate ground clutter determine a geolocation based on other inputs. The processor 100 may then produce and steer a corresponding null. It may be appreciated that the processor 100 may include a general-purpose processor for sensor 108, 110 analysis and / or a field programmable gate array to electronically configure the ESA 104.

In one exemplary embodiment, data from a radio altimeter may be combined with an air data system for heading information and GPS for latitude and longitude to steer a null automatically. Where a stationary, ground clutter (e.g., a bridge) is within radar range, the processor 100 may place and steer a null in the direction of the ground clutter while the radar is looking further down a runway for windshear, for example. Likewise, during takeoff, that null position may change because the position of the ground clutter with respect to the angle of the radar is changing as the aircraft gets closer to the ground clutter.

While specific descriptions have been directed toward "ground clutter", it may be appreciated that the principles may be applied to any stationary target, whether or not it may be classified as ground clutter, that should be rejected in favor of other targets that might be obscured otherwise.

In at least one embodiment, the system may embody a multi-mode radar (weather, windshear, detect and avoid, runway imaging, or the like). In such cases, clutter may not necessarily be stationary. For example, it may be desirable to exclude airplanes within view of the radar that may cause some ground clutter or false alerts. The inventive principles described herein are applicable to any application where it would be desirable to exclude targets with a known and predictable relative position with respect to the ESA 104.

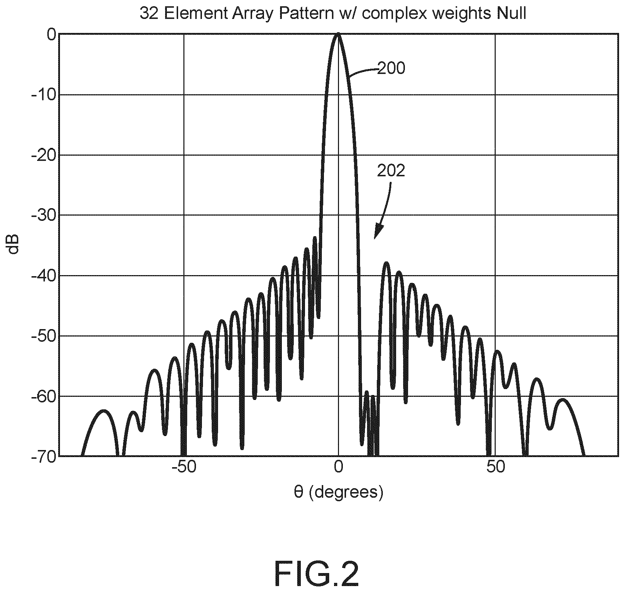

Referring to FIG. 2, a 1-way radiation pattern according to an exemplary embodiment is shown. The antenna pattern includes a main lobe 200 and corresponding side lobes. Where ground clutter is within the view or return of the side lobes, such return signals may obscure desirable targets. A null 202 (or taper adjustment) is created and steered using complex weights of the AESA. The 2-way side lobes in the area of interest (around 10 degrees) may be at least 70 dB below the main lobe 200. This will essentially eliminate the return power from any undesired clutter targets.

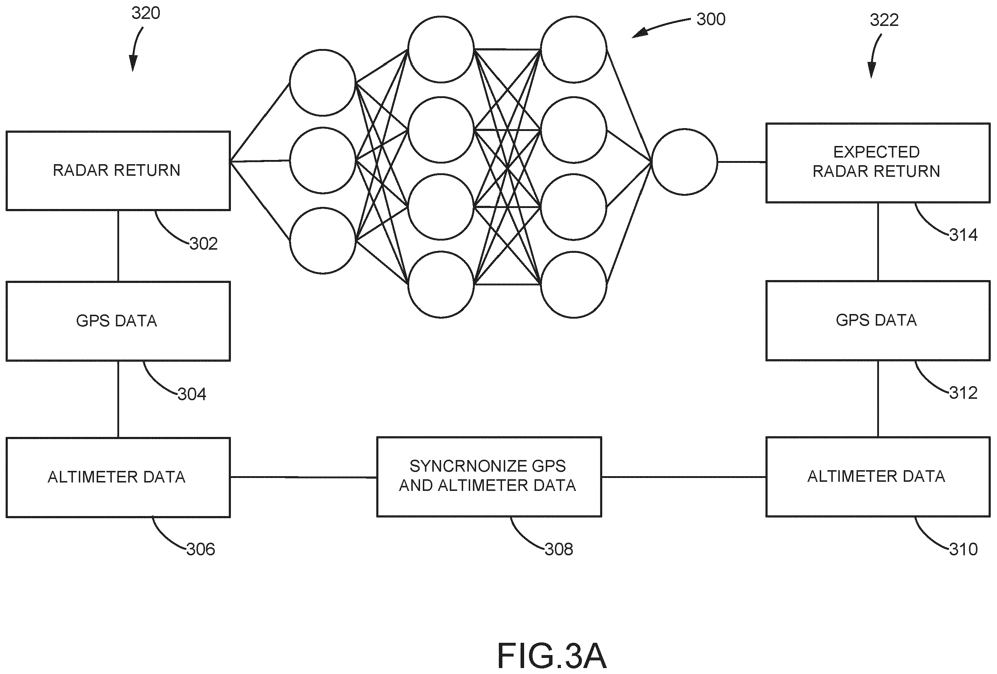

Referring to FIGS. 3A-3B, block diagrams of a neural network 300 according an exemplary embodiment of the inventive concepts disclosed herein is shown. The neural network 300 comprises an input layer, and output layer, and a plurality of internal layers. Each layer comprises a plurality of neurons or nodes. The neural network 300 receives signals and identifies the locations of non-weather targets such as buildings, trees, mountains, and other ground-based obstacles (or the known locations of mobile obstacles); furthermore, the neural network 300 may be trained to identify patterns of ground clutter. The neural network 300 may then output nulls at these locations, or adjustments to a taper, to effectively suppress radar echoes from the non-weather targets and reduce ground clutter.

During a training phase, as shown in FIG. 3A, the neural network 300 receives training data 320 including radar return data 302 tagged with sensor data such as GPS data 304 and altimeter data 306. The radar return data 302 may comprise raw data acquisition of the time domain I/Q signal. Such raw data may be represented as a 2-dimensional tensor for a fixed sample time (represented as an image). The training data 320 is associated with an output 322 including a radar return signal 314 without clutter.

**To** train the neural network 300, training data 320 must include radar return signals 302 with and without clutter and labeled ground truth radar return signal 314. The output data 322 may also include GPS data 312 and altimeter data 310. During training, the GPS data 304, 312 and altimeter data 306, 310 are synchronized 308. The GPS data 304, 312 and altimeter data 306, 310 represent boundary conditions.

**The** boundary conditions indicate that the system knows what a radar return signal should be at a specific geolocation, as defined by GPS and an altimeter (such as a radio altimeter). Synchronization 308 ensures that the radar return data 302 at that known GPS location and that known radio altimeter reading is logically constrained to the data labels. For training purposes, it may be insufficient to provide a radar return signal 302 and a radar return signal 314 without clutter for training. Boundary conditions provide additional context to logically constraint the process from providing a false decluttered image.

In at least one embodiment, radar return signal 302 may be tagged with an I value and a Q value in the time domain, and the corresponding time of the sample. The training data 320 comprises samples for fixed time intervals. The neural network 300 may be trained to adjust the I/Q values to match expected return value as if the clutter was not present.

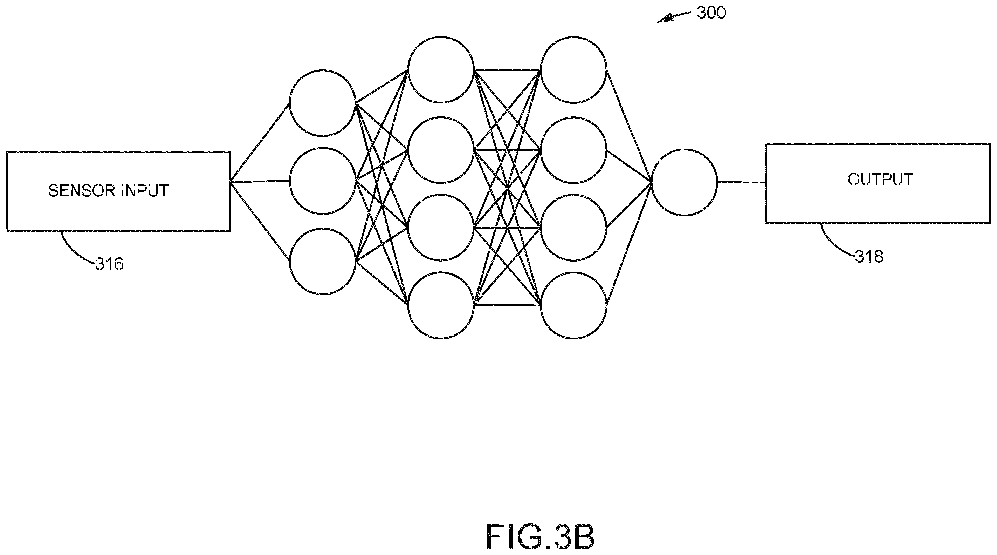

During an execution phase, as shown in FIG. 3B, input 316 to the neural network 300, including radar return signals, GPS data, and altimeter data, may produce radar return signal outputs with adjustments to the time domain I/Q signal such that the output 318 of the neural network is the time domain I/Q with clutter removed, if it's present, for a given GPS geolocation and a given altitude based on the radio altimeter.

While the description herein is directed to a specific implementation of a neural network, it may be appreciated that other machine learning techniques and algorithms are envisioned. For example, a convolution neural network may be trained for image / feature extraction.

It may be appreciated that while a single neural network 300 is illustrated, embodiments of the present disclosure may utilize multiple, independent neural networks.

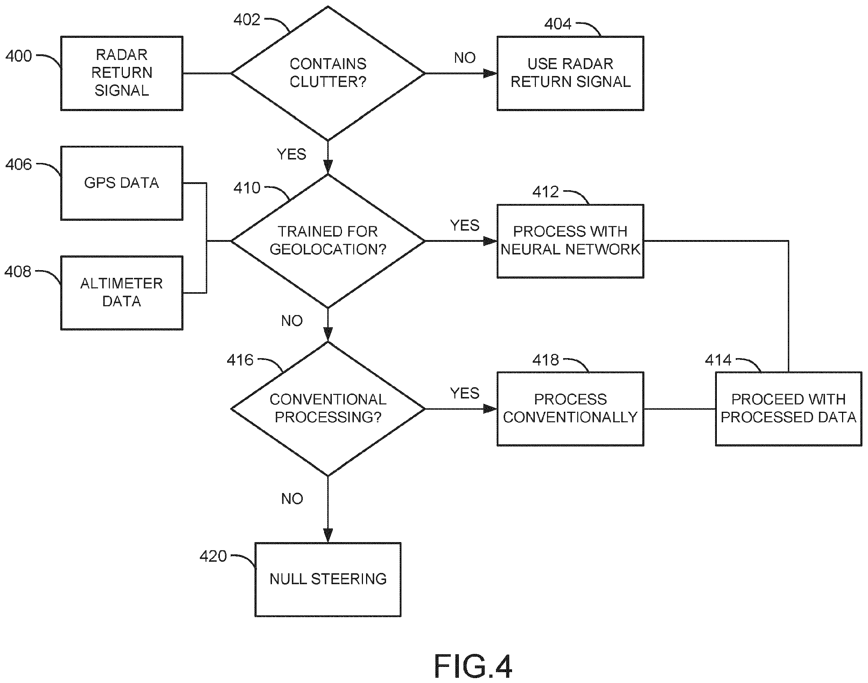

Referring to FIG. 4, a flowchart of a method for determining a processing architecture to de-clutter a return signal is shown. The system making the determination may receive a radar return signal 400. The radar return signal 400 may comprise a time domain I/Q signal. The system determines 402 is if the radar return signal 400 contains clutter; this determination 402 may be algorithmic, selected by a crewmember, or some default setting. If no clutter is present, a system may use 404 the radar return signal 400 without modification.

If the system determines 402 that clutter is (or may be) present, the system may receive GPS data 406 and altimeter data 408. Where the system includes a trained neural network, the system determines 410 if the neural network is trained on data including the boundary constraint of the current geolocation and altitude (e.g., if there is a file in memory corresponding to those boundary constraints). If so, the system processes the radar return signal 400 via the neural network (including GPS data 406 and altitude data 408) as described herein. The system then proceeds 414 with the processed radar return signal.

**If** the system determines 410 that the neural network is not trained on data including the boundary constrain of the current geolocation and altitude, or if no trained neural network is present, the system may determine 416 if conventional algorithmic processing is desirable. If so (e.g., no a priori data exists for null steering), then the radar return signal 400 is processed 418 conventionally, and the system proceeds 414 to utilize the processed radar return signal.

If the system determines 416 that conventional processing is not desirable, the system may utilize null steering 420 to point nulls or adjust tapers at the clutter source in order to minimize the amount of reflected energy from that cluttering objects. Alternatively, or in addition, the system may skew the main beam toward the sky and use a side lobe to pick up the radar return signal and minimize the intensity coming from the clutter source.

Accurately detecting threats is key to developing an ESA radar for autonomous operation. Mitigating false windshear alerts due to ground clutter is essential for achieving full MOPS compliance. Adaptively adjusting the taper on receive will provide a path towards full MOPS compliance by minimizing side lobe clutter while preserving SNR. Our competitors are also currently pursuing an ESA solution.

Embodiments of the present disclosure enable an enhanced weather radar system for applications such as aviation, meteorology, and military surveillance. They provide an efficient and effective solution for reducing ground clutter and improving the detection of weather phenomena. In addition to weather detection, dynamic antenna pattern nulling can also be used for "down-looking" where the radar is tasked with searching and tracking several airborne targets within a high ground clutter environment. In a complex search and track environment, embodiments can steer a null in the direction of clutter (ground or weather) while preserving the integrity of the target detection, as reference against absolute "earth" coordinates.

## Claims

1. A computer apparatus comprising:
an electronically scanned array , ESA antenna;
a data storage element (106);
at least one processor (100) in data communication with the ESA antenna, the data storage element (106), and a memory storing processor (100) executable code for configuring the at least one processor (100) to:
determine a relative location of a ground clutter source with respect to the ESA antenna;
determine an electronic configuration to produce a null in a radiation pattern of the ESA corresponding to the relative location of the ground clutter source; and
continuously steer the null to maintain a relative orientation of the null toward the ground clutter source; and
a plurality of sensors, wherein the plurality of sensors includes a GPS/GNSS receiver and an altimeter, wherein the at least one processor (100) is further configured to receive GPS data (304) and altimeter data (306);
wherein the at least one processor (100) is configured as a trained neural network; and
the trained neural network is configured to:
receive the GPS data (304) and the altimeter data (306);
determine a current geolocation and a current altitude;
determine that the neural network is trained on data including boundary constraints of the current geolocation and altitude, then determine an I/ Q adjustment to a radar return signal.

2. The apparatus of Claim 1, wherein the at least one processor (100) is configured to retrieve a predetermined geolocation of the ground clutter source from the data storage element (106).

3. The computer apparatus of Claim 1 or 2, wherein the at least one processor (100) is further configured to:
receive a plurality of sensor streams from the plurality of sensors;
collate the sensor streams based on time stamps and an aircraft location and altitude; and
identify one or more ground clutter sources based on the sensor streams.

4. The computer apparatus of Claim 1 or 2, wherein the plurality of sensors further includes one or more of Precision Navigation Timing "PNT", weather radar relative navigation, radar landing altimeter, Electro-optic runway landing imagers, TACAN, LORAN and glide slope/localizer landing systems.

5. The computer apparatus of any preceding Claim, wherein the null is at least 70 dB below a main lobe in the radiation pattern, or wherein the at least one processor (100) comprises a processor (100) configured to determine the relative location and a field programmable gate array configured to produce the electronic configuration.

6. A method comprising:
determining a relative location of a ground clutter source with respect to an electronically scanned array , ESA antenna;
determining an electronic configuration to adjust an amplitude taper or non-uniform phase distribution along an aperture of the ESA antenna to create a radiation pattern of the ESA to manipulate side lobe levels at a location corresponding to the relative location of the ground clutter source;
continuously adjusting the amplitude taper to maintain the manipulated side lobe levels toward the ground clutter source;
receiving GPS data (304) and altimeter data (306) by at least one processor (100) from a plurality of sensors, wherein the plurality of sensors includes GPS/GNSS receivers and an altimeter;
configuring the at least one processor (100) as a trained neural network; and
wherein the trained neural network is configured to:
receive the GPS data (304) and the altimeter data (306);
determine a current geolocation and altitude;
determine that the neural network is trained on data including boundary constraints of the current geolocation and altitude, then
determine an I/Q adjustment to a radar return signal.

7. The method of Claim 6, further comprising retrieving a predetermined geolocation of the ground clutter source from a data storage element (106), or further comprising:
receiving a plurality of sensor streams from a plurality of sensors;
collating the sensor streams based on time stamps and an aircraft location and altitude; and
identifying one or more ground clutter sources based on the sensor streams.

8. The method of Claim 7, wherein:
the trained neural network is configured to:
wherein the plurality of sensors includes one or more of Precision Navigation Timing "PNT", weather radar relative navigation, radar landing altimeter, Electro-optic runway landing imagers, TACAN, LORAN and glide slope/localizer landing systems.

9. The method of Claim 6, wherein the side lobe level is at least 70 dB below a main lobe in the radiation pattern at the location corresponding to the relative location of the ground clutter source.

10. A multi-mode radar system comprising:
an electronically scanned array , ESA antenna;
a data storage element (106); and
at least one processor (100) in data communication with the ESA antenna, the data storage element (106), and a memory storing processor (100) executable code for configuring the at least one processor (100) to:
determine a relative location of a ground clutter source with respect to the ESA antenna;
determine an electronic configuration to produce a null in a radiation pattern of the ESA corresponding to the relative location of the ground clutter source;
continuously steer the null to maintain a relative orientation of the null toward the ground clutter source;
a plurality of sensors, wherein the plurality of sensors includes GPS/GNSS receivers and an altimeter, wherein the at least one processor (100) is further configured to receive GPS data (304) and altimeter data (306);
the at least one processor (100) is configured as a trained neural network; and
the trained neural network is configured to:
receive the GPS data (304) and the altimeter data (306);
determine a current geolocation and a current altitude;
determine that the neural network is trained on data including boundary constraints of the current geolocation and altitude, then determine an I/Q adjustment to a radar return signal.

11. The multi-mode radar system of Claim 10, wherein the at least one processor (100) is configured to retrieve a predetermined geolocation of the ground clutter source from the data storage element (106).

12. The multi-mode radar system of Claim 10 or 11,
further comprising a plurality of sensors, wherein the at least one processor (100) is further configured to:
receive a plurality of sensor streams from the plurality of sensors;
collate the sensor streams based on time stamps and an aircraft location and altitude; and
identify one or more ground clutter sources based on the sensor streams.

13. The multi-mode radar system of Claim 10,
wherein the plurality of sensors includes one or more of Precision Navigation Timing "PNT", multi-mode radar relative navigation, radar landing altimeter, Electro-optic runway landing imagers, TACAN, LORAN and glide slope/localizer landing systems.

14. The multi-mode radar system of Claim 10,
wherein the null is at least 70 dB below a main lobe in the radiation pattern, or wherein the at least one processor (100) comprises a processor (100) configured to determine the relative location and a field programmable gate array configured to produce the electronic configuration.

## Patentansprüche

1. Computervorrichtung, umfassend:
eine elektronisch geschwenkte Gruppenantenne, ESA-Antenne;
ein Datenspeicherelement (106);
mindestens einen Prozessor (100) in Datenkommunikation mit der ESA-Antenne, dem Datenspeicherelement (106) und einem Speicher, der von dem Prozessor (100) ausführbaren Code speichert, um den mindestens einen Prozessor (100) zu konfigurieren zum:
Bestimmen einer relativen Position einer Bodenclutter-Quelle in Bezug auf die ESA-Antenne;
Bestimmen einer elektronischen Konfiguration, um eine Nullstelle in einem Strahlungsdiagramm der ESA zu produzieren, die der relativen Position der Bodenclutter-Quelle entspricht; und
kontinuierlichen Steuern der Nullstelle, um eine relative Ausrichtung der Nullstelle auf die Bodenclutter-Quelle beizubehalten; und
eine Vielzahl von Sensoren, wobei die Vielzahl von Sensoren einen GPS/GNSS-Empfänger und einen Höhenmesser beinhaltet, wobei der mindestens eine Prozessor (100) ferner konfiguriert ist, GPS-Daten (304) und Höhenmesserdaten (306) zu empfangen;
wobei der mindestens eine Prozessor (100) als ein trainiertes neuronales Netzwerk konfiguriert ist; und
das trainierte neuronale Netzwerk konfiguriert ist zum:
Empfangen der GPS-Daten (304) und der Höhenmesserdaten (306);
Bestimmen einer aktuellen Geolokalisierung und einer aktuellen Höhe;
Bestimmen, dass das neuronale Netzwerk mit Daten trainiert ist, die Randbedingungen der aktuellen Geolokalisierung und Höhe beinhalten, dann Bestimmen einer I/Q-Anpassung an ein Radar-Rücksignal.

2. Vorrichtung nach Anspruch 1, wobei der mindestens eine Prozessor (100) konfiguriert ist, eine vorbestimmte Geolokalisierung der Bodenclutter-Quelle aus dem Datenspeicherelement (106) abzurufen.

3. Computervorrichtung nach Anspruch 1 oder 2, wobei der mindestens eine Prozessor (100) ferner konfiguriert ist zum:
Empfangen einer Vielzahl von Sensorströmen von der Vielzahl von Sensoren;
Zusammenstellen der Sensorströme basierend auf Zeitstempeln und einer Luftfahrzeugposition und -höhe; und
Identifizieren einer oder mehrerer Bodenclutter-Quellen basierend auf den Sensorströmen.

4. Computervorrichtung nach Anspruch 1 oder 2, wobei die Vielzahl von Sensoren ferner eines oder mehreres von Precision Navigation Timing "PNT", relativer Wetterradarnavigation, Radar-Lande-Höhenmesser, elektrooptischen Landebahn-Landebildgebern, TACAN, LORAN und Gleitpfad/Localizer-Landesystemen beinhaltet.

5. Computervorrichtung nach einem der vorhergehenden Ansprüche, wobei die Nullstelle mindestens 70 dB unter einer Hauptkeule in dem Strahlungsdiagramm liegt, oder wobei der mindestens eine Prozessor (100) einen Prozessor (100), der konfiguriert ist, die relative Position zu bestimmen, und ein Field Programmable Gate Array umfasst, das konfiguriert ist, die elektronische Konfiguration zu produzieren.

6. Verfahren, umfassend:
Bestimmen einer relativen Position einer Bodenclutter-Quelle in Bezug auf eine elektronisch geschwenkte Gruppenantenne, ESA-Antenne;
Bestimmen einer elektronischen Konfiguration zum Anpassen eines Amplituden-Tapers oder einer ungleichmäßigen Phasenverteilung entlang einer Apertur der ESA-Antenne, um ein Strahlungsdiagramm der ESA zu erzeugen, um Nebenkeulenpegel an einer Position zu manipulieren, die der relativen Position der Bodenclutter-Quelle entspricht;
kontinuierliches Anpassen des Amplituden-Tapers, um die manipulierten Nebenkeulenpegel in Richtung der Bodenclutter-Quelle beizubehalten;
Empfangen von GPS-Daten (304) und Höhenmesserdaten (306) durch mindestens einen Prozessor (100) von einer Vielzahl von Sensoren, wobei die Vielzahl von Sensoren GPS/GNSS-Empfänger und einen Höhenmesser beinhaltet;
Konfigurieren des mindestens einen Prozessors (100) als ein trainiertes neuronales Netzwerk; und
wobei das trainierte neuronale Netzwerk konfiguriert ist zum:
Empfangen der GPS-Daten (304) und der Höhenmesserdaten (306);
Bestimmen einer aktuellen Geolokalisierung und Höhe;
Bestimmen, dass das neuronale Netzwerk mit Daten trainiert ist, die Randbedingungen der aktuellen Geolokalisierung und Höhe beinhalten, dann Bestimmen einer I/Q-Anpassung an ein Radar-Rücksignal.

7. Verfahren nach Anspruch 6, ferner umfassend das Abrufen einer vorbestimmte Geolokalisierung der Bodenclutter-Quelle aus einem Datenspeicherelement (106), oder ferner umfassend:
Empfangen einer Vielzahl von Sensorströmen von einer Vielzahl von Sensoren;
Zusammenstellen der Sensorströme basierend auf Zeitstempeln und einer Luftfahrzeugposition und -höhe; und
Identifizieren einer oder mehrerer Bodenclutter-Quellen basierend auf den Sensorströmen.

8. Verfahren nach Anspruch 7, wobei:
das trainierte neuronale Netzwerk konfiguriert ist zum:
wobei die Vielzahl von Sensoren eines oder mehreres von Precision Navigation Timing "PNT", relativer Wetterradarnavigation, Radar-Lande-Höhenmesser, elektrooptischen Landebahn-Landebildgebern, TACAN, LORAN und Gleitpfad/Localizer-Landesystemen beinhaltet.

9. Verfahren nach Anspruch 6, wobei der Nebenkeulenpegel an der Position, die der relativen Position der Bodenclutter-Quelle entspricht, mindestens 70 dB unter einer Hauptkeule in dem Strahlungsdiagramm liegt.

10. Multimodus-Radarsystem, umfassend: Multimodus-Radarsystem, umfassend:
eine elektronisch geschwenkte Gruppenantenne, ESA-Antenne;
ein Datenspeicherelement (106); und
mindestens einen Prozessor (100) in Datenkommunikation mit der ESA-Antenne, dem Datenspeicherelement (106) und einem Speicher, der von dem Prozessor (100) ausführbaren Code speichert, um den mindestens einen Prozessor (100) zu konfigurieren zum:
Bestimmen einer relativen Position einer Bodenclutter-Quelle in Bezug auf die ESA-Antenne;
Bestimmen einer elektronischen Konfiguration, um eine Nullstelle in einem Strahlungsdiagramm der ESA zu produzieren, die der relativen Position der Bodenclutter-Quelle entspricht;
kontinuierlichen Steuern der Nullstelle, um eine relative Ausrichtung der Nullstelle auf die Bodenclutter-Quelle beizubehalten;
eine Vielzahl von Sensoren, wobei die Vielzahl von Sensoren GPS/GNSS-Empfänger und einen Höhenmesser beinhaltet, wobei der mindestens eine Prozessor (100) ferner konfiguriert ist, GPS-Daten (304) und Höhenmesserdaten (306) zu empfangen;
der mindestens eine Prozessor (100) als ein trainiertes neuronales Netzwerk konfiguriert ist; und
das trainierte neuronale Netzwerk konfiguriert ist zum:
Empfangen der GPS-Daten (304) und der Höhenmesserdaten (306);
Bestimmen einer aktuellen Geolokalisierung und einer aktuellen Höhe;
Bestimmen, dass das neuronale Netzwerk mit Daten trainiert ist, die Randbedingungen der aktuellen Geolokalisierung und Höhe beinhalten, dann Bestimmen einer I/Q-Anpassung an ein Radar-Rücksignal.

11. Multimodus-Radarsystem nach Anspruch 10, wobei der mindestens eine Prozessor (100) konfiguriert ist, eine vorbestimmte Geolokalisierung der Bodenclutter-Quelle aus dem Datenspeicherelement (106) abzurufen.

12. Multimodus-Radarsystem nach Anspruch 10 oder 11, ferner umfassend eine Vielzahl von Sensoren, wobei der mindestens eine Prozessor (100) ferner konfiguriert ist zum:
Empfangen einer Vielzahl von Sensorströmen von der Vielzahl von Sensoren;
Zusammenstellen der Sensorströme basierend auf Zeitstempeln und einer Luftfahrzeugposition und -höhe; und
Identifizieren einer oder mehrerer Bodenclutter-Quellen basierend auf den Sensorströmen.

13. Multimodus-Radarsystem nach Anspruch 10, wobei:
die Vielzahl von Sensoren eines oder mehreres von Precision Navigation Timing "PNT", relativer Multimodus-Radarnavigation, Radar-Lande-Höhenmesser, elektrooptischen Landebahn-Landebildgebern, TACAN, LORAN und Gleitpfad/Localizer-Landesystemen beinhaltet.

14. Multimodus-Radarsystem nach Anspruch 10, wobei die Nullstelle mindestens 70 dB unter einer Hauptkeule in dem Strahlungsdiagramm liegt, oder wobei der mindestens eine Prozessor (100) einen Prozessor (100), der konfiguriert ist, die relative Position zu bestimmen, und ein Field Programmable Gate Array umfasst, das konfiguriert ist, die elektronische Konfiguration zu produzieren.

## Revendications

1. Appareil informatique comprenant :
une antenne réseau à balayage électronique, ESA ;
un élément de stockage de données (106) ;
au moins un processeur (100) en communication de données avec l'antenne ESA, l'élément de stockage de données (106) et une mémoire stockant un code exécutable par processeur (100) destiné à configurer l'au moins un processeur (100) pour :
déterminer un emplacement relatif d'une source d'échos parasites de sol par rapport à l'antenne ESA ;
déterminer une configuration électronique pour produire un zéro dans un motif de rayonnement de l'ESA correspondant à l'emplacement relatif de la source d'échos parasites de sol ; et
orienter en continu le zéro pour maintenir une orientation relative du zéro en direction de la source d'échos parasites de sol ; et
une pluralité de capteurs, dans lequel la pluralité de capteurs comporte un récepteur GPS/GNSS et un altimètre, dans lequel l'au moins un processeur (100) est en outre configuré pour recevoir des données GPS (304) et des données d'altimètre (306) ;
dans lequel l'au moins un processeur (100) est configuré comme un réseau neuronal entraîné ; et
le réseau neuronal entraîné est configuré pour :
recevoir les données GPS (304) et les données d'altimètre (306) ;
déterminer une géolocalisation actuelle et une altitude actuelle ;
déterminer que le réseau neuronal est entraîné sur des données comportant les contraintes de limites de la géolocalisation et de l'altitude actuelles, puis déterminer un ajustement I/Q d'un signal de retour radar.

2. Appareil selon la revendication 1, dans lequel l'au moins un processeur (100) est configuré pour récupérer une géolocalisation prédéterminée de la source d'échos parasites de sol à partir de l'élément de stockage de données (106).

3. Appareil informatique selon la revendication 1 ou 2, dans lequel l'au moins un processeur (100) est en outre configuré pour :
recevoir une pluralité de flux de capteur en provenance de la pluralité de capteurs ;
regrouper les flux de capteur sur la base d'horodatages et d'un emplacement et d'une altitude d'aéronef ; et
identifier une ou plusieurs sources d'échos parasites de sol sur la base des flux de capteur.

4. Appareil informatique selon la revendication 1 ou 2, dans lequel la pluralité de capteurs comporte en outre un ou plusieurs des éléments suivants : un système de précision, navigation et synchronisation « PNT », une navigation relative par radar météorologique, un altimètre d'atterrissage radar, des imageurs électro-optiques d'atterrissage sur piste, un TACAN, un LORAN et des systèmes d'atterrissage par alignement de descente/alignement de piste.

5. Appareil informatique selon une quelconque revendication précédente, dans lequel le zéro est au moins 70 dB en dessous d'un lobe principal dans le motif de rayonnement, ou dans lequel l'au moins un processeur (100) comprend un processeur (100) configuré pour déterminer l'emplacement relatif et un réseau prédiffusé programmable par l'utilisateur configuré pour produire la configuration électronique.

6. Procédé comprenant :
la détermination d'un emplacement relatif d'une source d'échos parasites de sol par rapport à une antenne réseau à balayage électronique, ESA ;
la détermination d'une configuration électronique pour ajuster une pondération d'amplitude ou une distribution de phase non uniforme le long d'une ouverture de l'antenne ESA pour créer un motif de rayonnement de l'ESA pour manipuler les niveaux de lobes latéraux à un emplacement correspondant à l'emplacement relatif de la source d'échos parasites de sol ;
l'ajustement en continu de la pondération d'amplitude pour maintenir les niveaux de lobes latéraux manipulés en direction de la source d'échos parasites de sol ;
la réception de données GPS (304) et de données d'altimètre (306) par au moins un processeur (100) à partir d'une pluralité de capteurs, dans lequel la pluralité de capteurs comporte des récepteurs GPS/GNSS et un altimètre ;
la configuration de l'au moins un processeur (100) comme un réseau neuronal entraîné ; et
dans lequel le réseau neuronal entraîné est configuré pour :
recevoir les données GPS (304) et les données d'altimètre (306) ;
déterminer une géolocalisation et une altitude actuelles ;
déterminer que le réseau neuronal est entraîné sur des données comportant les contraintes de limites de la géolocalisation et de l'altitude actuelles, puis déterminer un ajustement I/Q d'un signal de retour radar.

7. Procédé selon la revendication 6, comprenant en outre la récupération d'une géolocalisation prédéterminée de la source d'échos parasites de sol à partir d'un élément de stockage de données (106), ou comprenant en outre :
la réception d'une pluralité de flux de capteur en provenance d'une pluralité de capteurs ;
le regroupement des flux de capteur sur la base d'horodatages et d'un emplacement et d'une altitude d'aéronef ; et
l'identification d'une ou plusieurs sources d'échos parasites de sol sur la base des flux de capteur.

8. Procédé selon la revendication 7, dans lequel :
le réseau neuronal entraîné est configuré pour :
dans lequel la pluralité de capteurs comporte un ou plusieurs des éléments suivants : un système de précision, navigation et synchronisation « PNT », une navigation relative par radar météorologique, un altimètre d'atterrissage radar, des imageurs électro-optiques d'atterrissage sur piste, un TACAN, un LORAN et des systèmes d'atterrissage par alignement de descente/alignement de piste.

9. Procédé selon la revendication 6, dans lequel le niveau de lobe latéral est au moins 70 dB en dessous d'un lobe principal dans le motif de rayonnement à l'emplacement correspondant à l'emplacement relatif de la source d'échos parasites de sol.

10. Système radar multimode comprenant :
une antenne réseau à balayage électronique, ESA ;
un élément de stockage de données (106) ; et
au moins un processeur (100) en communication de données avec l'antenne ESA, l'élément de stockage de données (106) et une mémoire stockant un code exécutable par processeur (100) destiné à configurer l'au moins un processeur (100) pour :
déterminer un emplacement relatif d'une source d'échos parasites de sol par rapport à l'antenne ESA ;
déterminer une configuration électronique pour produire un zéro dans un motif de rayonnement de l'ESA correspondant à l'emplacement relatif de la source d'échos parasites de sol ;
orienter en continu le zéro pour maintenir une orientation relative du zéro en direction de la source d'échos parasites de sol ;
une pluralité de capteurs, dans lequel la pluralité de capteurs comporte des récepteurs GPS/GNSS et un altimètre, dans lequel l'au moins un processeur (100) est en outre configuré pour recevoir des données GPS (304) et des données d'altimètre (306) ;
l'au moins un processeur (100) est configuré comme un réseau neuronal entraîné ; et
le réseau neuronal entraîné est configuré pour :
recevoir les données GPS (304) et les données d'altimètre (306) ;
déterminer une géolocalisation actuelle et une altitude actuelle ;
déterminer que le réseau neuronal est entraîné sur des données comportant les contraintes de limites de la géolocalisation et de l'altitude actuelles, puis déterminer un ajustement I/Q d'un signal de retour radar.

11. Système radar multimode selon la revendication 10, dans lequel l'au moins un processeur (100) est configuré pour récupérer une géolocalisation prédéterminée de la source d'échos parasites de sol à partir de l'élément de stockage de données (106).

12. Système radar multimode selon la revendication 10 ou 11, comprenant en outre une pluralité de capteurs, dans lequel l'au moins un processeur (100) est en outre configuré pour :
recevoir une pluralité de flux de capteur en provenance de la pluralité de capteurs ;
regrouper les flux de capteur sur la base d'horodatages et d'un emplacement et d'une altitude d'aéronef ; et
identifier une ou plusieurs sources d'échos parasites de sol sur la base des flux de capteur.

13. Système radar multimode selon la revendication 10, dans lequel :
la pluralité de capteurs comporte un ou plusieurs des éléments suivants : un système de précision, navigation et synchronisation « PNT », une navigation relative par radar multimode, un altimètre d'atterrissage radar, des imageurs électro-optiques d'atterrissage sur piste, un TACAN, un LORAN et des systèmes d'atterrissage par alignement de descente/alignement de piste.

14. Système radar multimode selon la revendication 10, dans lequel le zéro est au moins 70 dB en dessous d'un lobe principal dans le motif de rayonnement, ou dans lequel l'au moins un processeur (100) comprend un processeur (100) configuré pour déterminer l'emplacement relatif et un réseau prédiffusé programmable par l'utilisateur configuré pour produire la configuration électronique.
